# EUROPÄISCHE PATENTANMELDUNG

(11) **EP 3 550 205 A1**
(43) Veröffentlichungstag der Anmeldung: **09.10.2019**
(21) Anmeldenummer: 18165578.8
(22) Anmeldetag: 04.04.2018
(51) Int. Cl.: F21S 41/24, F21V 8/00

(54) **LICHTLEITER FÜR EIN KRAFTFAHRZEUGLICHTMODUL**

(71) Anmelder: ZKW Group GmbH, 3250 Wieselburg (AT)
(72) Erfinder: Danner, Laura, 3362 Mauer b. Amstetten (AT); Ecker-Endl, Markus, 3500 Krems an der Donau (AT); Eichinger, Bernd, 3375 Krummnussbaum (AT); Kemetmüller, Matthias, 1220 Wien (AT); Lahnsteiner, Johanna, 4802 Ebensee (AT); Reutner, Zahra, 3680 Persenbeug (AT); Strohmüller, Alexander, 3370 Ybbs (AT)
(74) Vertreter: Patentanwaltskanzlei Matschnig & Forsthuber OG

(57) **Zusammenfassung**

Lichtleiter (1) für ein Kraftfahrzeuglichtmodul (2), welcher Lichtleiter (1) zumindest eine Stirnfläche (3) zum Einkoppeln von Licht eines Leuchtmittels (4), eine Grenzfläche (5), welche Grenzfläche (5) zumindest einen ersten Bereich (50) und einen zweiten Bereich (51) aufweist, wobei der erste Bereich (50) zum Totalreflektieren des in den Lichtleiter (1) eingekoppelten Lichts eingerichtet ist, und eine Mehrzahl als Erhebungen ausgebildeter Lichtauskoppelelemente (52) aufweist, welche Lichtauskoppelelemente (52) gegenüber dem zweiten Bereich (51) an der Grenzfläche (5) des Lichtleiters (1) angeordnet sind und dazu vorgesehen sind, sich in dem Lichtleiter (1) ausbreitendes Licht (6) derart umzulenken, dass es an dem zweiten Bereich (51) der Grenzfläche (5) aus dem Lichtleiter (1) auskoppelt, wobei die Lichtauskoppelelemente (52) als in einer Längsrichtung (7) des Lichtleiters (1) nacheinander angeordnete, sich wiederholende Lichtauskoppelelemente-Gruppen (520), (510), (530) ausgebildet sind, wobei jede Lichtauskoppelelemente-Gruppe (520), (510), (530) mehrere Lichtauskoppelelemente (521) bis (524), (531) bis (534), (541) bis (544) aufweist, wobei die Lichtauskoppelelemente (521) bis (524) dazu eingerichtet sind, das sich in dem Lichtleiter (1) ausbreitende Licht (6) derart umzulenken, dass es an dem zweiten Bereich (51) der Grenzfläche (5) aus dem Lichtleiter (1) in unterschiedliche, vorgegebene Auskopplungsrichtungen (60) bis (67) auskoppelt, wobei zumindest eine erste Auskopplungsrichtung (60) bezüglich der Längsrichtung (7) des Lichtleiters (1) rückwärts gerichtet ist und zumindest eine zweite Auskopplungsrichtung (61) bis (63), (65) bis (67) bezüglich der Längsrichtung (7) des Lichtleiters (1) vorwärts gerichtet ist.

## Beschreibung

Die Erfindung betrifft einen Lichtleiter für ein Kraftfahrzeuglichtmodul, welcher Lichtleiter zumindest eine Stirnfläche zum Einkoppeln von Licht eines Leuchtmittels, eine Grenzfläche, welche Grenzfläche zumindest einen ersten Bereich und einen zweiten Bereich aufweist, wobei der erste Bereich zum Totalreflektieren des in den Lichtleiter eingekoppelten Lichts eingerichtet ist, und eine Mehrzahl als - von der Mitte des Lichtleiters aus gesehen - Erhebungen ausgebildeter Lichtauskoppelelemente aufweist, welche Lichtauskoppelelemente gegenüber dem zweiten Bereich an der Grenzfläche des Lichtleiters angeordnet sind und dazu vorgesehen sind, sich in dem Lichtleiter ausbreitendes Licht derart umzulenken, dass es an dem zweiten Bereich der Grenzfläche aus dem Lichtleiter auskoppelt.

Weiters betrifft die Erfindung ein Kraftfahrzeuglichtmodul umfassend zumindest einen solchen Lichtleiter.

Darüber hinaus betrifft die Erfindung einen Kraftfahrzeugscheinwerfer mit zumindest einem solchen Kraftfahrzeuglichtmodul und ein Kraftfahrzeug mit zumindest einem solchen Kraftfahrzeugscheinwerfer.

Lichtleiter oben genannter Art sind in dem Stand der Technik bekannt und werden in Beleuchtungsvorrichtungen für Kraftfahrzeuge, unter anderem in Kraftfahrzeugscheinwerfern standardmäßig verwendet. Oft weisen die Lichtauskoppelemente in den Lichtleitern eine gemeinsame Hauptabstrahlrichtung auf. Dabei wird oft (besonders im KFZ-Bau) den Lichtleitern ein gewisser Lichtstromoutput in vorgegebene Raumrichtungen abverlangt, um in jeweiligen Ländern geltenden gesetzlichen Mindestanforderungen gerecht zu werden. Beispielsweise schreibt die gesetzliche Vorschrift E/ECE/324/Rev.1/Add.90/Rev.3; E/ECE/TRANS/505/Rev.1/Add.90/Rev.3 vom 02. Dezember 2013 vor, dass eine Lichtverteilung eines Seitenmarkierungslichtes (einer Seitenmarkierungsleuchte) eine minimale und maximale Lichtstärke über einen sehr breiten Winkelbereich sowohl horizontal (seitlich des Kraftfahrzeugs) - bis zu 90°, als auch vertikal - bis zu 20° aufzuweisen hat. Insbesondere sei dabei auf Kapitel 7 und Anhang 1 der oben genannten Vorschrift verwiesen, wo Werte der Lichtstärke (in Cd) aber auch Werte der Winkel für Seitenmarkierungsleuchten für verschiedene KFZ-Klassen angegeben sind: SM1 - Seitenmarkierungsleuchte für alle KFZ und SM2 - Seitenmarkierungsleuchte für KFZ bis 3,5 Tonnen und bis 9 Personen Beförderungskapazität. Solche Lichtverteilungen werden normalerweise dadurch erreicht, dass der Lichtstrominput so hoch gewählt wird, dass die Anforderungen auch in den seitlichen Bereichen der Lichtverteilung erfüllt sind. Um nun einerseits den Anforderungen/Vorschriften zu genügen und andererseits eine homogene Lichtverteilung zu erreichen, kann man den Lichtstrom eines Leuchtmittels, dessen Licht in den Lichtleiter eingespeist wird, dementsprechend erhöhen. Dies kann unter Umständen dazu führen, dass die vorschriftsmäßigen Werte für die Lichtintensität in den jeweiligen Betrachtungswinkeln (s.o.) überschritten werden. Darüber hinaus ist dann ein höherer Strom erforderlich, was wiederum zu einer erhöhten Wärmeproduktion führt und die Lebensdauer des Lechtmittels verringert.

Alternativ können Lichtauskoppelelemente verwendet werden, die verschiedene Abstrahlrichtungen aufweisen. Dies führt aber dazu, dass ein abhängig von der Betrachtungsrichtung wandernder Lichtschwerpunkt entsteht (siehe unten), wodurch die Homogenität der Lichtverteilung stark beeinträchtigt wird.

Die Aufgabe der vorliegenden Erfindung besteht darin, die Lichtleiter, insbesondere Lichtleiter für Kraftfahrzeuglichtmodule, derart weiter zu bilden, dass mit ihrer Hilfe eine gesetzeskonforme Lichtverteilung erzeugt werden kann, deren Homogenität von der Betrachtungsrichtung nicht abhängt.

Diese Aufgabe wird mit einem Lichtleiter der oben genannten Art dadurch gelöst, dass die Lichtauskoppelelemente als in einer Längsrichtung des Lichtleiters nacheinander angeordnete, sich wiederholende Lichtauskoppelelemente-Gruppen ausgebildet sind, wobei jede Lichtauskoppelelemente-Gruppe, mehrere Lichtauskoppelelemente aufweist, wobei die Lichtauskoppelelemente dazu eingerichtet sind, das sich in dem Lichtleiter ausbreitende Licht derart umzulenken, dass es an dem zweiten Bereich der Grenzfläche aus dem Lichtleiter in unterschiedliche, vorgegebene Auskopplungsrichtungen auskoppelt, wobei zumindest eine erste Auskopplungsrichtung bezüglich der Längsrichtung des Lichtleiters rückwärts gerichtet ist und zumindest eine zweite Auskopplungsrichtung bezüglich der Längsrichtung des Lichtleiters vorwärts gerichtet ist.

Es kann mit Vorteil vorgesehen sein, dass zumindest zwei Lichtauskoppelelemente, jeder Lichtauskoppelelemente-Gruppe derart ausgebildet sind und/oder derart zusammenwirken, dass die zumindest zwei Lichtauskoppelelemente, zumindest einen Teil des sich in dem Lichtleiter ausbreitenden Lichtes derart umlenken, dass der zumindest eine Teil des sich in dem Lichtleiter ausbreitenden Lichtes an dem zweiten Bereich der Grenzfläche aus dem Lichtleiter zumindest teilweise in die erste Auskopplungsrichtung auskoppelt, wobei die zumindest zwei Lichtauskoppelelemente, jeder Lichtauskoppelelemente-Gruppe vorzugsweise größer als die restlichen Lichtauskoppelelemente, dieser Lichtauskoppelelemente-Gruppe sind.

Weiters kann mit Vorteil vorgesehen sein, dass die Lichtauskoppelelemente als sich quer zu der Längsrichtung des Lichtleiters erstreckende Erhebungen ausgebildet sind.

Dabei kann es zweckdienlich sein, wenn die sich quer zu der Längsrichtung des Lichtleiters erstreckenden Erhebungen als Mikrooptik-Prismen ausgebildet sind, wobei die Mikrooptik-Prismen vorzugsweise das gleiche Material wie der Lichtleiter umfassen, insbesondere aus diesem Material bestehen.

Darüber hinaus kann es zweckmäßig sein, wenn die Mikrooptik-Prismen jeder Lichtauskoppelelemente-Gruppe, derart ausgebildet sind, dass ihre ersten Prismenwinkel über einen vorgegebenen ersten Prismenwinkel-Bereich variieren.

Dabei kann es sich als nützlich erweisen, wenn die Mikrooptik-Prismen jeder Lichtauskoppelelemente-Gruppe, derart angeordnet und/oder ausgebildet sind, dass der erste Prismenwinkel von einem ersten, der Stirnfläche am nächsten liegenden, Mikrooptik-Prisma, der Lichtauskoppelelemente-Gruppe zu einem letzten, der Stirnfläche am weitesten entfernt liegenden, Mikrooptik-Prisma, der Lichtauskoppelelemente-Gruppe, kontinuierlich größer oder kontinuierlich kleiner wird.

Es hat sich erwiesen, dass es besonders vorteilhaft ist, wenn die Mikrooptik-Prismen in jeder Lichtauskoppelelemente-Gruppe derart ausgebildet sind, dass ihre zweiten Prismenwinkel über einen vorgegebenen zweiten Prismenwinkel-Bereich variieren.

Dabei kann mit Vorteil vorgesehen sein, wenn die Mikrooptik-Prismen jeder Lichtauskoppelelemente-Gruppe derart angeordnet und/oder ausgebildet sind, dass der zweite Prismenwinkel von einem ersten, der Stirnfläche am nächsten liegenden, Mikrooptik-Prisma der Lichtauskoppelelemente-Gruppe zu einem letzten, der Stirnfläche am weitesten entfernt liegenden, Mikrooptik-Prisma der Lichtauskoppelelemente-Gruppe kontinuierlich größer oder kontinuierlich kleiner wird.

Weitere Vorteile ergeben sich, wenn alle Lichtauskoppelelemente-Gruppen zueinander geometrisch ähnlich ausgebildet sind.

Vorteilhafterweise kann es vorgesehen sein, dass zumindest zwei der Lichtauskoppelelemente-Gruppen, unterschiedlich ausgebildet sind, wobei vorzugsweise jeder der zumindest zwei unterschiedlich ausgebildeten Lichtauskoppelelemente-Gruppen, dazu eingerichtet ist, das sich in dem Lichtleiter ausbreitende Licht derart umzulenken, dass es an dem zweiten Bereich der Grenzfläche aus dem Lichtleiter in jeweils einen Auskopplungswinkel-Bereich auskoppelt.

Dabei ergeben sich weitere Vorteile, wenn sich unterschiedliche Auskopplungswinkel-Bereiche überschneiden und/oder überlappen.

Bei einer praxisbewährten Ausführungsform der vorliegenden Erfindung umfasst das Kraftfahrzeuglichtmodul zumindest einen oben beschriebenen Lichtleiter und ein Leuchtmittel, welches Leuchtmittel derart ausgebildet ist und/oder in Bezug auf den Lichtleiter derart angeordnet ist, dass das Leuchtmittel in einem eingeschalteten Zustand Licht abstrahlt, welches Licht im Wesentlichen vollständig und vorzugsweise direkt in den Lichtleiter einkoppelt.

Es kann vorteilhaft sein, wenn das Kraftfahrzeuglichtmodul als eine Seitenmarkierungsleuchte ausgebildet ist.

Nachfolgend wird die Erfindung anhand vorteilhafter nichteinschränkender Ausführungsformen näher erläutert, die in einer Zeichnung veranschaulicht sind. In dieser zeigt:
Fig. 1 einen Lichtleiter in einem Kraftfahrzeuglichtmodul in perspektivischer Ansicht;
Fig. 1a einen vergrößerten Ausschnitt des Lichtleiters 1 der Figur 1;
Fig. 2 eine Draufsicht auf ein Horizontal-Schnittbild von sich wiederholenden Lichtauskoppelelemente-Gruppen eines Lichtleiters;
Fig. 3 eine Draufsicht auf ein Horizontal-Schnittbild eines Ausschnittes eines Lichtleiters;
Fig. 4a und Fig. 4b einen Vergleich von Lichtverteilungen, die jeweils mit einem herkömmlichen Lichtleiter (Fig. 4a) und einem dem erfindungsgemäßen Lichtleiter entsprechenden Lichtleiter (Fig. 4b) erzeugbar sind, und
Fig. 5 einen in ein Kraftfahrzeug eingebauten Lichtleiter.

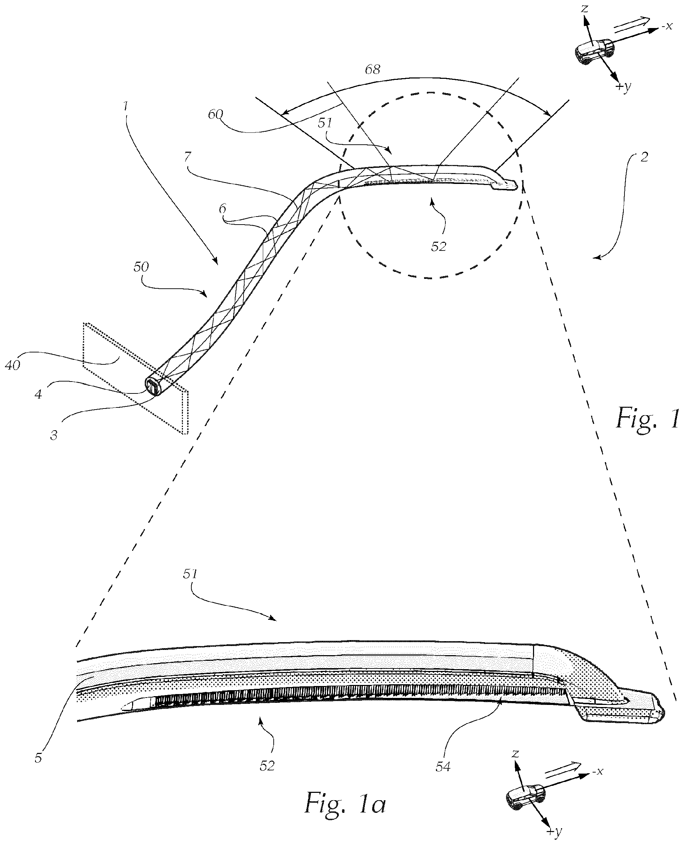

Zunächst wird auf Figur 1 Bezug genommen. Diese zeigt eine perspektivische Ansicht eines dem erfindungsgemäßen Lichtleiter entsprechenden Lichtleiters. Der Lichtleiter 1 ist dabei gebogen, um beispielsweise dem Verlauf einer Abdeckscheibe eines Kraftfahrzeugscheinwerfers oder einer Pfeilung (spitz zulaufender Karosserie-Front) Rechnung zu tragen.

Der Lichtleiter 1 weist an einem ersten Ende eine Stirnfläche 3 auf, durch welche Stirnfläche 3 Licht eines Leuchtmittels 4 eingekoppelt werden kann, wobei das Leuchtmittel 4 beispielsweise als eine Lichtquelle, insbesondere eine LED-Lichtquelle, ein Lichtkonversionsmittel oder Ähnliches ausgebildet sein kann. Der Lichtleiter 1 weist darüber hinaus eine Längsrichtung 7 auf, entlang der sich der Lichtleiter 1 erstreckt, und eine Grenzfläche 5 (siehe Figur 1a). Im Querschnitt (quer zu der Längsrichtung) ist der Lichtleiter 1 beispielsweise in etwa kreisförmig ausgebildet. Vorzugsweise weist die Grenzfläche 5 in etwa die Form einer Oberfläche eines gebogenen Zylinders auf. Der Lichtleiter 1 ist aus einem Material ausgebildet, welches optisch dichter als Luft ist, was eine Totalreflexion des in den Lichtleiter 1 eingekoppelten Lichts an der Grenzfläche 5 und folglich Leitung des Lichts entlang der Längsrichtung 7 des Lichtleiters 1 ermöglicht.

Die Figur 1 zeigt, dass der Lichtleiter 1 (und jeder dem erfindungsgemäßen Lichtleiter entsprechende Lichtleiter) als ein optisches Bauteil eines Kraftfahrzeuglichtmoduls 2 fungieren kann. Das Kraftfahrzeuglichtmodul 2 (ebenfalls in Figur 1 gezeigt) umfasst den Lichtleiter 1 selbst und das bereits genannte Leuchtmittel 4. Das Leuchtmittel 4, in diesem Fall eine LED-Lichtquelle, kann beispielsweise an einer Platine (Leiterplatte) 40 angeordnet sein. Dabei ist es zweckmäßig, wenn die optisch relevanten Bauteile des Kraftfahrzeuglichtmoduls 2 derart zueinander stehen, dass möglichst viel Licht, insbesondere das gesamte Licht, welches das Leuchtmittel 4 abgibt, in den Lichtleiter 1 eingekoppelt wird. Dabei können solche Parameter wie Akzeptanzwinkel des Lichtleiters 1 und/oder Abstrahlcharakteristikum des Leuchtmittels 4, beispielsweise Winkelabhängigkeit der Strahlstärke des Leuchtmittels 4 (bei LED-Lichtquellen verhält sich die Winkelabhängigkeit bekannterweise gemäß dem Lambert'schen Gesetz), eine Rolle für die Menge des eingekoppelten Lichts spielen. Oft ist es in der Praxis vorgesehen, dass die die LED-Lichtquellen tragende Platine 40 derart angeordnet ist, dass die Richtung, in die die Strahlstärke der LED-Lichtquellen maximal ist, quer zu der Stirnfläche 3 Lichtleiters 1 verläuft. Die lichtemittierende Fläche der LED-Lichtquelle ist üblicherweise ca. wenige Mikrometer (in etwa 100 bis 600 µm) von der Stirnfläche 3 entfernt.

Je nach seinem Aufgabengebiet weist das Kraftfahrzeuglichtmodul 2 unterschiedliche Abstrahlcharakteristiken (Winkelabhängigkeit der Strahlstärke des Kraftfahrzeuglichtmoduls) auf - und strahlt verschiedene Lichtverteilungen ab. Der Lichtleiter 1 des in Figur 1 gezeigten Kraftfahrzeuglichtmoduls 2 ist derart ausgebildet, dass er besonders günstig in Seitenmarkierungsleuchten eingesetzt werden kann. Eine Seitenmarkierungsleuchte kann als ein in einem Kraftfahrzeugscheinwerfer einbaubares Kraftfahrzeuglichtmodul ausgebildet sein. Beispielsweise kann das in Figur 1 gezeigte Kraftfahrzeuglichtmodul 2 als eine Seitenmarkierungsleuchte ausgebildet sein. Der Figur 1 ist zu entnehmen, dass das Kraftfahrzeuglichtmodul 2 Licht in einem relativ großen Abstrahlwinkelbereich 68 (bezogen auf -y-Richtung) abstrahlen kann (vorzugsweise grösser 90° und kleiner 180°). Ein großer Abstrahlwinkelbereich 68 ist vor allem bei Seitenmarkierungsleuchten vorteilhaft, weil sich das Markierungslicht, welches von der Seitenmarkierungsleuchte abgestrahlt wird, sowohl "rückwärts", das heißt in eine der Fahrtrichtung ("-x" in Figur 1) entgegengesetzte Richtung, als auch "vorwärts", das heißt in die Fahrtrichtung, ausbreiten kann. Der Begriff "Fahrtrichtung" bezieht sich auf die Vorwärtsfahrtrichtung eines Kraftfahrzeugs, wenn sich das erfindungsgemäße Kraftfahrzeuglichtmodul in seiner üblichen Einbaulage in diesem Kraftfahrzeug, beispielsweise als Teil eines Kraftfahrzeugscheinwerfers befindet. Analog lässt sich feststellen, dass "rückwärts"/"vorwärts" im Zusammenhang mit der vorliegenden Erfindung auch "etwa in/ gegen die Richtung der Stirnfläche des Lichtleiters" beziehungsweise "gegen/in die Längsrichtung des Lichtleiters im Lichtauskoppelbereich" bedeuten kann. Welche Bedeutung den Begriffen "rückwärts"/"vorwärts" zuzuordnen ist, ist dem Fachmann allerdings aus dem Kontext und insbesondere bei der Betrachtung der Figuren vollkommen klar. Figur 1 verdeutlicht dass die Längsrichtung 7 eines gebogenen Lichtleiters 1 der Lichtausbreitungsrichtung entspricht und deshalb je nach Bereich des Lichtleiters, den man betrachtet, verschiedene räumliche Orientierung, beispielsweise hinsichtlich der Fahrtrichtung "-x" oder hinsichtlich der optischen Achse eines Kraftfahrzeugscheinwerfers haben kann.

Die Grenzfläche 5 weist zumindest einen ersten, zu der Stirnfläche 3 am nächsten liegenden Bereich 50 und einen zweiten, in die Längsrichtung 7 des Lichtleiters 1 gesehen nach dem ersten Bereich 50 angeordneten, Bereich 51 (Lichtauskoppelbereich) auf. Der erste Bereich 50 ist zum Totalreflektieren des in den Lichtleiter 1 eingekoppelten Lichts eingerichtet. Darüber hinaus weist die Grenzfläche 5 eine Mehrzahl als Erhebungen ausgebildeter Lichtauskoppelelemente 52 auf, welche Lichtauskoppelelemente 52 gegenüber dem zweiten Bereich 51 an der Grenzfläche 5 des Lichtleiters 1 angeordnet sind und dazu vorgesehen sind, sich in dem Lichtleiter 1 ausbreitendes Licht 6 derart umzulenken, dass es an dem zweiten Bereich 51 der Grenzfläche 5 aus dem Lichtleiter 1 auskoppelt. Nach der Auskopplung aus dem Lichtleiter 1 breitet sich das Licht vorzugsweise innerhalb des Abstrahlwinkelbereichs 68 weg von der Grenzfläche 5 aus. Ein Beispiel eines Lichtstrahls, welcher in den Lichtleiter 1 eingekoppelt wird, sich in dem Lichtleiter 1 ausbreitet und danach rückwärts ausgekoppelt wird, ist in Figur 1 schematisch dargestellt. Dieser Lichtstrahl wird in eine Richtung 60 ausgekoppelt, die der erfindungsgemäßen ersten Auskopplungsrichtung entspricht. An dieser Stelle sei angemerkt, dass das sich in dem Lichtleiter 1 ausbreitende Licht 6 auch an dem zweiten Bereich 51 totalreflektieren kann (siehe Figur 1). Der Unterschied zwischen dem ersten und dem zweiten Bereich der Grenzfläche besteht darin, dass der zweite Bereich 51 als Lichtauskoppelbereich der Grenzfläche 5 des Lichtleiters 1 ausgebildet ist. Dabei kann der zweite Bereich 51 beispielsweise eine derart ausgebildete Krümmung aufweisen, dass der zweite Bereich 51 eine Oberfläche einer Linse bildet und die Lichtauskoppelelemente 52 in der Brennebene dieser Linse angeordnet sind.

Figur 1a zeigt einen vergrößerten Ausschnitt des Lichtleiters 1 der Figur 1. Figur 1a zeigt, dass die Lichtauskoppelelemente 52 als sich quer zu der Längsrichtung 7 des Lichtleiters 1 erstreckende Erhebungen, beispielsweise als Mikrooptik-Prismen ausgebildet sein können. Die beispielsweise als Erhebungen ausgebildeten Lichtauskoppelelemente 52 können an einem Boden 53 einer sich entlang einer Längsrichtung 7 des Lichtleiters 1 erstreckenden, gegenüber dem zweiten Bereich 51 angeordneten Rille 54 angeordnet sein. Üblicherweise wird die Rille 54 in die Lichtausbreitungsrichtung - weg von der Stirnfläche 3 des Lichtleiters 1 - immer (kontinuierlich) tiefer und die Lichtauskoppelelemente 52 immer (kontinuierlich) größer, um die Menge des ausgekoppelten Lichts in etwa konstant zu halten. Die Größe der erfindungsgemäßen Lichtauskoppelelemente 52, beispielsweise Erhebungen, insbesondere Mikrooptik-Prismen liegt im Mikrometerbereich (einige Mikrometer bis 100 - 200 Mikrometer). Lichtauskoppelelemente 52, beispielsweise die sich quer zu der Längsrichtung 7 des Lichtleiters 1 erstreckenden Erhebungen insbesondere die Mikrooptik-Prismen umfassen vorzugsweise das gleiche Material wie der Lichtleiter 1 und sind insbesondere aus diesem Material, das vorzugsweise optisch dichter als Luft ist, ausgebildet.

Darüber hinaus kann es von Vorteil sein, wenn die Lichtauskoppelelemente 52 beabstandet sind und der Abstand zwischen den Lichtauskoppelelementen 52 in etwa 100 bis 200 Mikrometer beträgt. Eine solche Distanz hat den Vorteil, dass das menschliche Auge bei üblichen Betrachtungsabständen die Lichtauskoppelelemente 52 nicht mehr auflösen kann. Somit ergibt sich ein von der Betrachtungsrichtung unabhängiges und sehr homogenes Erscheinungsbild.

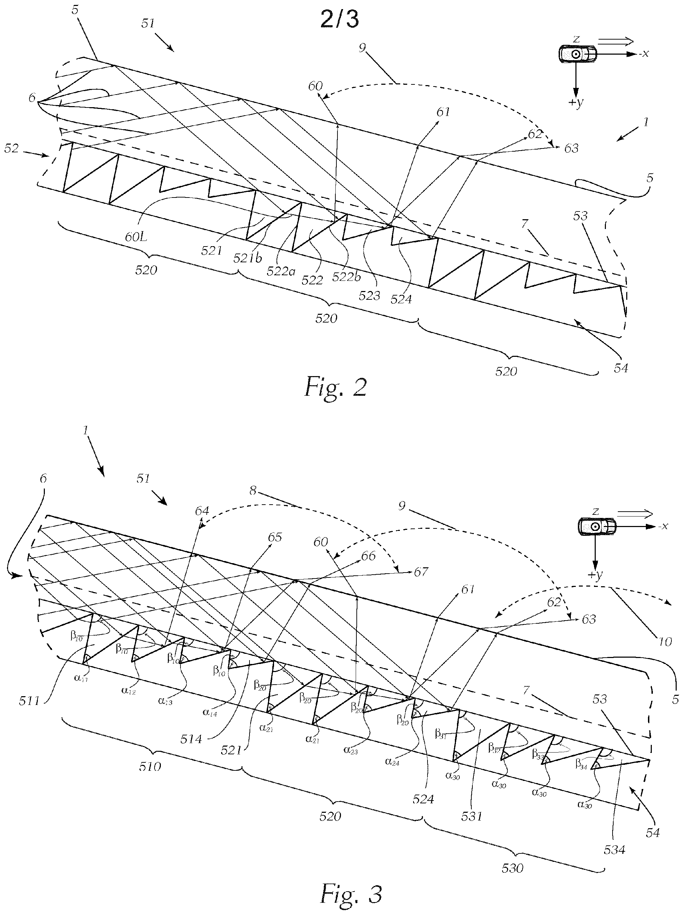

Erfindungsgemäß sind die Lichtauskoppelelemente 52 als in einer Längsrichtung 7 des Lichtleiters 1 nacheinander angeordnete, sich wiederholende Lichtauskoppelelemente-Gruppen 520 ausgebildet. Dies zeigt Figur 2, die eine Draufsicht auf ein Horizontal-Schnittbild eines noch größeren Ausschnitts des Lichtleiters 1 darstellt. Jede Lichtauskoppelelemente-Gruppe 520 weist mehrere (gezeigt sind vier) vorzugsweise unterschiedlich ausgebildete Lichtauskoppelelemente 521, 522, 523 und 524 auf, wobei die Lichtauskoppelelemente 521 bis 524 dazu eingerichtet sind, das sich in dem Lichtleiter 1 ausbreitende Licht 6 derart umzulenken, dass es an dem zweiten Bereich 51 der Grenzfläche 5 aus dem Lichtleiter 1 in unterschiedliche, vorgegebene Auskopplungsrichtungen 60, 61, 62, 63 auskoppelt, wobei zumindest eine erste Auskopplungsrichtung 60 bezüglich der Längsrichtung 7 des Lichtleiters 1 rückwärts gerichtet ist und zumindest eine zweite Auskopplungsrichtung 61, 62, 63 bezüglich der Längsrichtung 7 des Lichtleiters 1 vorwärts gerichtet ist.

Figur 2 ist insbesondere zu entnehmen, dass zumindest zwei, hier als Mikrooptik-Prismen ausgebildete, Lichtauskoppelelemente 521, 522 jeder Lichtauskoppelelemente-Gruppe 520 derart ausgebildet sind und/oder derart zusammenwirken, dass die zumindest zwei Lichtauskoppelelemente 521, 522 zumindest einen Teil des sich in dem Lichtleiter 1 ausbreitenden Lichtes 6 derart umlenken, dass der zumindest eine Teil des sich in dem Lichtleiter 1 ausbreitenden Lichtes 6 an dem zweiten Bereich 51 der Grenzfläche 5 aus dem Lichtleiter 1 zumindest teilweise in die erste Auskopplungsrichtung 60 auskoppelt. Beispielsweise trifft ein Lichtstrahl 60L, der in die erste Auskopplungsrichtung 60 ausgekoppelt wird, auf eine Rückflanke 521b eines ersten Mikrooptik-Prismas 521 der Lichtauskoppelelemente-Gruppe 520. Der Einfallswinkel dieses Lichtstrahls 60L ist dabei kleiner als der Grenzwinkel der Totalreflexion, weshalb dieser Lichtstrahl 60L gebrochen wird und aus dem Lichtleiter 1 austritt. Zwar zeigt Figur 2 einen einzigen Lichtstrahl 60L solcher Art, jedoch ist es vollkommen klar, dass es mehrere solche Lichtstrahlen gibt, die hier aus Platzgründen nicht gezeigt sind. Der Begriff "Rückflanke" bezieht sich dabei auf eine der zwei nachfolgend beschriebenen Begrenzungsflächen eines Mikrooptik-Prismas. Jedes Mikrooptik-Prisma weist eine erste, dem sich in dem Lichtleiter 1 ausbreitenden Licht 6 zugewandte, Begrenzungsfläche und eine zweite, dem sich in dem Lichtleiter 1 ausbreitenden Licht 6 abgewandte, Begrenzungsfläche auf. Die ersten Begrenzungsflächen werden auch als Rückflanken bezeichnet. Die zweiten Begrenzungsflächen werden auch als "Vorderflanken" genannt bezeichnet. Der auf diese Weise aus dem Lichtleiter 1 ausgetretene Lichtstrahl 60L tritt auf eine Vorderflanke 522a eines zweiten Mikrooptik-Prismas 522 der Lichtauskoppelelemente-Gruppe 520 und koppelt in den Lichtleiter 1 wieder ein. Anschließend breitet sich der durch die zweite Begrenzungsfläche 522a (die Vorderflanke) des zweiten Mikrooptik-Prismas 522 in den Lichtleiter wieder eingekoppelte Lichtstrahl 60L in dem zweiten Mikrooptik-Prisma 522 entlang der Längsrichtung 7 des Lichtleiters 1 weiter aus, bis er auf die erste Begrenzungsfläche 522b des zweiten Mikrooptik-Prismas 522 trifft. Dadurch dass der Strahlengang des Lichtstrahls 60L durch sein Austreten aus dem und Wiedereinkoppeln in den Lichtleiter 1 beeinflusst wird, ist der Einfallswinkel des Lichtstrahls 60L auf die Rückflanke 522b des zweiten Mikrooptik-Prismas 522 der Lichtauskoppelelemente-Gruppe 520 dergestalt, dass er erstens größer-gleich (größer oder gleich) als der Grenzwinkel der Totalreflexion ist und zweitens der Lichtstrahl 60L an der Rückflanke 522b des zweiten Mikrooptik-Prismas 522 rückwärts in Hinblick auf die Längsrichtung 7 des Lichtleiters 1 beziehungsweise auf die Lichtausbreitungsrichtung des Lichts 6 in dem Lichtleiter 1 gestreut/totalreflektiert wird.

Es sei angemerkt, dass, obwohl Figur 2 das erste Lichtauskoppelelement 521 und das zweite Lichtauskoppelelement 522 innerhalb der Lichtauskoppelelemente-Gruppe 520 benachbart zeigt, diese Lichtauskoppelelemente 521, 522 durchaus ein oder mehrere Lichtauskoppelelemente dazwischen aufweisen können. Es kann zweckmäßig sein, die zusammenwirkenden Lichtauskoppelelemente 521, 522 einer jeden Lichtauskoppelelemente-Gruppe 520 größer als die restlichen Lichtauskoppelelemente 523, 524 der jeweiligen Lichtauskoppelelemente-Gruppe 520 auszubilden. Beispielsweise zeigt Figur 2, dass die zusammenwirkenden als Mikrooptik-Prismen ausgebildeten Lichtauskoppelelemente 521, 522 gleich hoch sind und höher (und auch in diesem Fall steiler) als die restlichen Mikrooptik-Prismen 523, 524 der Lichtauskoppelelemente-Gruppe 520.

Anhand des oben beschriebenen Strahlengangs des beispielhaften Lichtstrahls 60L lässt sich feststellen, dass erfindungsgemäß zumindest zwei, beispielsweise als Mikrooptik-Prismen ausgebildete, Lichtauskoppelelemente 521, 522 jeder Lichtauskoppelelemente-Gruppe 520 derart ausgebildet sind und/oder derart zusammenwirken, dass die zumindest zwei Lichtauskoppelelemente 521, 522 zumindest einen Teil (Lichtstrahl 60L) des sich in dem Lichtleiter 1 ausbreitenden Lichtes 6 derart umlenken, dass der zumindest eine Teil des sich in dem Lichtleiter 1 ausbreitenden Lichtes 6 rückwärts in Bezug auf die Längsrichtung 7 des Lichtleiters 1 gestreut wird, bevor dieser zumindest eine Teil an dem zweiten Bereich 51 der Grenzfläche 5 aus dem Lichtleiter 1 zumindest rückwärts ausgekoppelt wird. Es sei an dieser Stelle nochmals erwähnt, dass unter Rückwärtsstreuung eine Streuung unter einem Winkel von mehr als 90° zur Längsachse 7 verstanden wird, wobei die Ausrichtung der Längsachse 7 zweckdienlicherweise lokal, am Streupunkt/Einfallspunkt des Lichtstrahls 60L definiert wird.

Figur 2 zeigt, dass alle Lichtauskoppelelemente-Gruppen 520 gleich beziehungsweise geometrisch ähnlich sind. Dabei umfasst jede Lichtauskoppelelemente-Gruppe 520 vier Lichtauskoppelelemente 521 bis 524. Die Anzahl der Lichtauskoppelelemente in einer Lichtauskoppelelemente-Gruppe ist nicht auf vier beschränkt. Jede Lichtauskoppelelemente-Gruppe kann beispielsweise 2 bis 10, vorzugsweise 3 bis 5 Lichtauskoppelelemente umfassen. Die geometrische Ähnlichkeit spielt eine Rolle, wenn man die Lichtauskoppelelemente größer ausbildet, je weiter sie von der Stirnfläche entfernt sind, beispielsweise wenn die Lichtauskoppelemente kontinuierlich größer werden. Dabei wird, wie oben erwähnt, die Menge des ausgekoppelten Lichts über die Länge des Auskoppelbereichs (des zweiten Bereichs 51) des Lichtleiters 1 in etwa konstant gehalten. Die geometrische Ähnlichkeit der Lichtauskoppelelemente-Gruppen über die Länge des Auskoppelbereichs kann sich aber bei der Kontrolle der Größe des Abstrahlwinkelbereichs 68 als hilfreich erweisen. Unter der "Länge des zweiten Bereichs" wird seine räumliche Ausdehnung entlang der Längsachse des Lichtleiters verstanden.

Die Lichtauskoppelelemente-Gruppen, die aus den Lichtauskoppelelementen gebildet sind, können sich aber durchaus unterscheiden (unterschiedlich ausgebildet sein), beispielsweise dadurch, dass sie aus unterschiedlicher Anzahl der Lichtauskoppelelemente bestehen und/oder unterschiedliche Konstellationen von Lichtauskoppelelementen betreffend der Form, der Größe der einzelnen Lichtauskoppelelemente, des Abstands zwischen den einzelnen Lichtauskoppelelementen und so weiter und so fort aufweisen. Durch Gestalten der Lichtauskoppelelemente-Gruppen kann beispielsweise erreicht werden, dass unterschiedlichen (unterschiedlich ausgebildeten) Lichtauskoppelelemente-Gruppen unterschiedliche Abstrahlwinkelbereiche entsprechen.

Figur 3 zeigt beispielsweise eine Draufsicht (entlang der z-Richtung) auf ein Horizontal-Schnittbild eines Ausschnittes eines dem Lichtleiter 1 der Figur 1 entsprechenden Lichtleiters, dessen Lichtauskoppelelemente 52 allerdings nicht aus den gleichen (Figur 2) sondern aus unterschiedlichen (hier drei) Lichtauskoppelelemente-Gruppen 510, 520, 530 gebildet sind. Die in der Längsrichtung 7 (Lichtausbreitungsrichtung) zweite Lichtauskoppelelemente-Gruppe 520 ist dabei die bereits im Zusammenhang mit Figur 2 beschriebene Lichtauskoppelelemente-Gruppe. Die restlichen Merkmale, die sich nicht auf eine erste Lichtauskoppelelemente-Gruppe 510 und auf eine dritte Lichtauskoppelelemente-Gruppe 530 beziehen, können den Figuren 1 und 2 entnommen werden. Die Verwendung mehrerer unterschiedlicher Lichtauskoppelelemente-Gruppen 510, 520, 530 kann die Homogenität des Erscheinungsbildes (der abgestrahlten Lichtverteilung) erhöhen. Wenn der Lichtleiter 1 in einer Leuchte, vorzugsweise in einem, beispielsweise als eine Seitenmarkierungsleuchte ausgebildeten Kraftfahrzeuglichtmodul eingesetzt wird, so ist das Erscheinungsbild dieser Leuchte erstaunlich homogen unabhängig vom Winkel, aus dem diese Leuchte betrachtet wird. Die Reihenfolge, in der die unterschiedlichen Lichtauskoppelelemente-Gruppen 510, 520, 530 wiederholt werden, kann verschieden sein. Beispielsweise kann ein erster, zu der Stirnfläche 3 am nächsten liegender Teil der Lichtauskoppelelemente 52 aus sich wiederholenden ersten Lichtauskoppelelemente-Gruppen 510 gebildet sein, ein zweiter, nach dem ersten Teil folgender Teil - aus sich wiederholenden zweiten Lichtauskoppelelemente-Gruppen 520 und ein dritter, nach dem zweiten Teil folgender Teil - aus sich wiederholenden dritten Lichtauskoppelelemente-Gruppen 530 gebildet sein. Da es, wie bereits erwähnt, zweckdienlich ist, die Lichtauskoppelelemente 52 immer (kontinuierlich) größer auszubilden, je weiter entfernt sie sich von der Stirnfläche 3 befinden, kann es auch zweckmäßig sein, wenn jede der unterschiedlichen Lichtauskoppelelemente-Gruppen 510, 520, 530 über die gesamte Länge eines die Lichtauskoppelelemente 52 aufweisenden Bereichs des Lichtleiters vorkommt beziehungsweise verteilt ist. Dabei finden die obigen, die geometrische Ähnlichkeit betreffende Überlegungen mit entsprechenden Änderungen auch auf unterschiedliche Lichtauskoppelelemente-Gruppen 510, 520, 530 ihre Anwendung. Beispielsweise können die ersten (zweiten, dritten usw.) Lichtauskoppelelemente-Gruppen 510 sowohl am Anfang (am nächsten zu der Stirnfläche 3 liegenden Ende) des die Lichtauskoppelelemente 52 aufweisenden Bereichs als auch am Ende (am weitesten von der Stirnfläche 3 liegenden Ende) des die Lichtauskoppelelemente 52 aufweisenden Bereichs vorkommen, wobei diese zueinander geometrisch ähnlich ausgebildet sind.

Konkret zeigt Figur 3 eine Anordnung aus drei unterschiedlichen Lichtauskoppelelemente-Gruppen 510, 520, 530, die einander abwechselnd angeordnet sind. Dabei kann nach der dritten Lichtauskoppelelemente-Gruppe 530 beispielsweise wieder die erste Lichtauskoppelelemente-Gruppe 510 kommen und so weiter. Die in Figur 3 dargestellten Lichtauskoppelelemente sind als Mikrooptik-Prismen ausgebildet. Dabei weist jedes Mikrooptik-Prisma einen ersten und einen zweiten Prismenwinkel auf. Der erste Prismenwinkel α₁₁ bis α₁₄, α₂₁ bis α₂₄, und α₃₀ ist zwischen der ersten und der zweiten Begrenzungsfläche (beziehungsweise zwischen der Vorder- und der Rückflanke) eines jeden Mikrooptik-Prismas eingeschlossen (siehe z.B. die Mikrooptik-Prismen 511, 514, 521 und 524 der Figur 3). Der zweite Prismenwinkel β₁₀ β₂₀, β₃₁ bis β₃₄, ist zwischen der zweiten Begrenzungsfläche (Vorderflanke) und dem Boden 53 der Rille 54 beziehungsweise der, vorzugsweise dem Boden 53 parallel verlaufenden Längsachse 7 des Lichtleiters 1 eines jeden Mikrooptik-Prismas eingeschlossen (siehe z.B. die Mikrooptik-Prismen 531 und 534 der Figur 3). Wie bereits erwähnt, fällt das sich in dem Lichtleiter ausbreitende Licht vorzugsweise auf die zweiten Begrenzungsflächen der Mikrooptik-Prismen ein. Dabei wird dieses einfallende Licht je nach Einfallswinkel entweder teils transmittiert und teils reflektiert oder totalreflektiert.

Figur 3 zeigt, dass die ersten Prismenwinkel α₁₁ bis α₁₄ und α₂₁ bis α₂₄ der Mikrooptik-Prismen der ersten und der zweiten Lichtauskoppelelemente-Gruppe 510 und 520, über vorzugsweise vorgegebene erste Prismenwinkel-Bereiche variieren. Die ersten Prismenwinkel α₃₀ der Mikrooptik-Prismen der dritten Lichtauskoppelelemente-Gruppe 530 bleiben hingegen konstant. Die ersten Prismenwinkel-Bereiche der ersten und der zweiten Lichtauskoppelelemente-Gruppen 510 und 520 können sich unterscheiden.

Darüber hinaus kann vorgesehen sein, dass die Mikrooptik-Prismen jeder (hier der ersten und der zweiten) Lichtauskoppelelemente-Gruppe 510, 520 derart angeordnet und/oder ausgebildet sind, dass der erste Prismenwinkel an, α₂₁ von einem ersten, der Stirnfläche 3 am nächsten liegenden, Mikrooptik-Prisma 521, 511 der Lichtauskoppelelemente-Gruppe 510, 520 zu einem letzten, der Stirnfläche 3 am weitesten liegenden, Mikrooptik-Prisma 514, 524 der Lichtauskoppelelemente-Gruppe 510, 520 immer (kontinuierlich) größer wird - α₁₁ < α₁₂ < α₁₃ < α₁₄, α₂₁ < α₂₃ < α₂₄ - oder immer (kontinuierlich) kleiner wird - α₁₁ > α₁₂ > α₁₃ > α₁₄, α₂₁ > α₂₃ > α₂₄ (nicht gezeigt).

Die Mikrooptik-Prismen der dritten Lichtauskoppelelemente-Gruppe 530 weisen einen variierenden zweiten Prismenwinkel β₃₁ bis β₃₄ auf, wobei die Werte des zweiten Prismenwinkels β₃₁ bis β₃₄ über einen vorgegebenen zweiten Prismenwinkel-Bereich variieren. Die zweiten Prismenwinkel β₁₀, β₂₀ der Mikrooptik-Prismen der ersten und der zweiten Lichtauskoppelelemente-Gruppe 510 und 520 können für die entsprechende Lichtauskoppelelemente-Gruppe, wie die Figur 3 zeigt, konstant bleiben.

Darüber hinaus sind die Mikrooptik-Prismen der dritten Lichtauskoppelelemente-Gruppe 530 derart angeordnet und/oder ausgebildet, dass der zweite Prismenwinkel von einem ersten, der Stirnfläche 3 am nächsten liegenden, Mikrooptik-Prisma 531 der dritten Lichtauskoppelelemente-Gruppe 530 zu einem letzten, der Stirnfläche 3 am weitesten liegenden, Mikrooptik-Prisma 534 der dritten Lichtauskoppelelemente-Gruppe 530 immer (kontinuierlich) größer wird - β₃₁ < β₃₂ < β₃₃ < β₃₄ - oder immer (kontinuierlich) kleiner wird - β₃₁ > β₃₂ > β₃₃ > β₃₄ (nicht gezeigt).

Es soll an dieser Stelle betont werden, dass es sich hierbei nur um ein nichteinschränkendes Beispiel handelt. Sowohl die ersten als auch die zweiten Prismenwinkel in jeder Lichtauskoppelelemente-Gruppe können variiert oder konstant gelassen werden. Die Lichtauskoppelelemente-Gruppen mit variierenden ersten und/oder zweiten Prismenwinkeln oder konstanten ersten und zweiten Prismenwinkeln können ebenfalls nach Belieben kombiniert werden.

Durch die ersten und die zweiten Prismenwinkel eines jeden Mikrooptik-Prismas kann seine Form und die Umlenkrichtung des auf dieses Mikrooptik-Prisma einfallenden Lichts vorgegeben und auf diese Weise eine Auskopplungsrichtung dem Mikrooptik-Prisma zugeordnet werden. Unterschiedlich ausgebildeten Mikrooptik-Prismen können demnach unterschiedliche Auskopplungsrichtungen zugeordnet werden.

Figur 3 zeigt drei Lichtauskoppelelemente-Gruppen 510, 520, 530 mit unterschiedlich ausgebildeten Mikrooptik-Prismen. Dabei sind die Mikrooptik-Prismen 511, 514, 521, 524, 531, 534 der einzelnen Lichtauskoppelelemente-Gruppen 510, 520, 530 derart angeordnet und/oder ausgebildet, dass den Lichtauskoppelelemente-Gruppen 510, 520, 530 jeweils unterschiedliche Auskopplungswinkel-Bereiche 8, 9, 10 zugeordnet sind. Die Lichtauskoppelelemente-Gruppen 510, 520, 530 sind also dazu eingerichtet, das sich in dem Lichtleiter 1 ausbreitende Licht 6 derart umzulenken, dass es an dem zweiten Bereich 51 der Grenzfläche 5 aus dem Lichtleiter 1 in jeweils einen vorzugsweise vorgegebenen Auskopplungswinkel-Bereich 8 bis 10 auskoppelt.

Es kann vorgesehen sein, dass sich unterschiedliche Auskopplungswinkel-Bereiche nicht überschneiden und/oder überlappen (nicht gezeigt).

Die Mikrooptik-Prismen der zweiten und der dritten Lichtauskoppelelemente-Gruppe 520, 530 sind derart ausgebildet und/oder angeordnet, dass die diesen Lichtauskoppelelemente-Gruppen 520, 530 jeweils zugeordnete zweite und dritte Auskopplungswinkel-Bereiche 9 und 10 sowohl Auskopplungsrichtungen nach rückwärts (beispielsweise die Auskopplungsrichtung 60) als auch Auskopplungsrichtungen nach vorwärts (beispielsweise in Auskopplungsrichtungen 61, 62 und 63) umfassen. Ein erster Auskopplungswinkel-Bereich 8 umfasst beispielsweise nur Auskopplungsrichtungen nach vorwärts - beispielsweise die Auskopplungsrichtungen 64, 65, 66 und 67.

Zurückkehrend zu Figur 1 sei nochmals erwähnt, dass der oben beschriebene Lichtleiter 1 als optisches Bauteil eines Kraftfahrzeuglichtmoduls 2 ausgebildet sein kann. Das Kraftfahrzeuglichtmodul 2 umfasst zumindest den Lichtleiter 1 und das Leuchtmittel 4, welches Leuchtmittel derart ausgebildet ist und/oder in Bezug auf den Lichtleiter 1 derart angeordnet ist, dass das Leuchtmittel 4 in einem eingeschalteten Zustand Licht abstrahlt, welches Licht vollständig und vorzugsweise direkt in den Lichtleiter 1 einkoppelt.

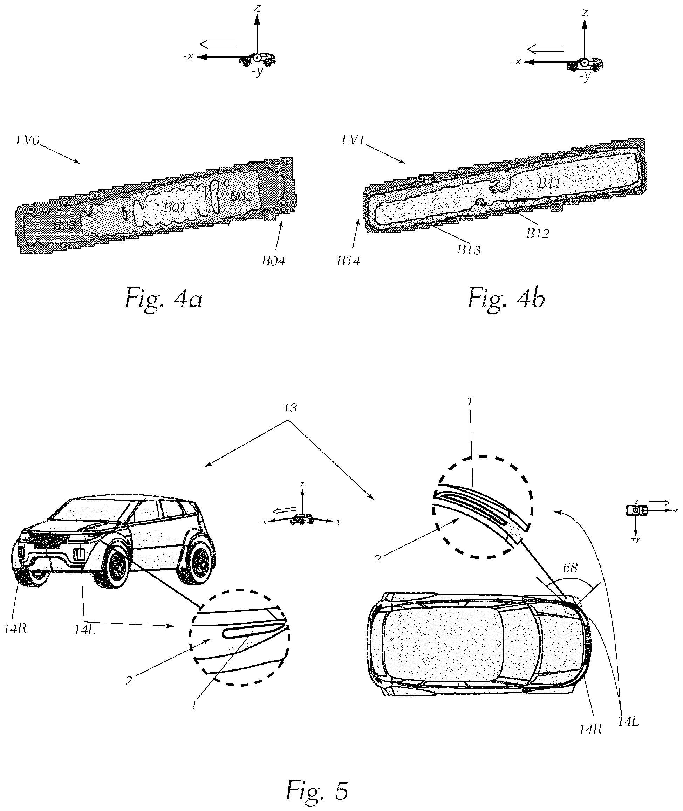

Das Kraftfahrzeuglichtmodul 2 kann als eine Seitenmarkierungsleuchte ausgebildet sein beziehungsweise zum Erzeugen einer Seitenmarkierungsleuchte-Lichtverteilung eingerichtet sein. Figuren 4a und 4b zeigen zwei Seitenmarkierungsleuchte-Lichtverteilungen LV0, LV1, die jeweils von einer Seitenmarkierungsleuchte erzeugt sind, wobei es sich bei der Figur 4a um eine mit einer Seitenmarkierungsleuchte mit einem herkömmlichen Lichtleiter (ohne Lichtauskoppelelemente-Gruppen) erzeugte Lichtverteilung LV0 handelt und die Figur 4b eine Lichtverteilung LV1 zeigt, die mit einer Seitenmarkierungsleuchte mit einem dem erfindungsgemäßen Lichtleiter entsprechenden Lichtleiter, beispielsweise dem Lichtleiter 1 der Figur 1 mit den wiederholenden Lichtauskoppelelemente-Gruppen 510, 520, 530 erzeugt wird. Beide Lichtverteilungen LV0, LV1 (Figur 4a und Figur 4b) wurden seitlich der Seitenmarkierungsleuchte im gleichen Abstand von der Seitenmarkierungsleuchte, direkt in "-y" -Richtung, bei 0° hinsichtlich der y-Achse, aufgenommen. Beide Lichtverteilungen LV0, LV1 - Seitenmarkierungsleuchte-Lichtverteilungen - weisen Bereiche unterschiedlicher Beleuchtungsstärken auf: B01 bis B04 und B10 bis B14, wobei die Beleuchtungsstärken der korrespondierenden Bereiche - B01 und B11, B02 und B12, B03 und B13, B04 und B14 - zur Verdeutlichung des Vergleichs gleich sind. Aus dem direkten Vergleich der Figuren 4a und 4b geht unmittelbar hervor, dass LV1 homogener ist. Dabei wird der Bereich B01 der Lichtverteilung LV0 oft als "Lichtschwerpunkt" bezeichnet. Wenn die herkömmliche Seitenmarkierungsleuchte in einem Kraftfahrzeug verbaut ist und ein Betrachter an dem Kraftfahrzeug seitlich vorbei geht, beobachtet der Betrachter den so genannten Lichtschwerpunkt-Wandereffekt, d.h. einen Effekt, bei dem der Lichtschwerpunkt zu einer oder zu der anderen Seite "wandert", je nach dem aus welchem Winkel die herkömmliche Seitenmarkierungsleuchte, d.h. aus welchem Winkel bezüglich der y-Achse die Seitenmarkierungsleuchte betrachtet wird. Dieser unangenehme Effekt wird durch Einsatz einer Seitenmarkierungsleuchte z.B. mit dem Lichtleiter 1 behoben.

Figur 5 zeigt zwei Ansichten - eine perspektivische Ansicht (links) und eine Ansicht von oben, d.h. entlang z-Richtung, (rechts) - eines Kraftfahrzeugs 13 mit zwei Kraftfahrzeugscheinwerfern 14L und 14R. Darüber hinaus zeigt Figur 5 eine vergrößerte Ansicht des linken Kraftfahrzeugscheinwerfers 14L, welcher Kraftfahrzeugscheinwerfer 14L das oben beschriebene, vorzugsweise als eine Seitenmarkierungsleuchte ausgebildete Kraftfahrzeuglichtmodul 2 mit dem Lichtleiter 1 umfasst. Es kann zweckmäßig sein, wenn sowohl der rechte als auch der linke Kraftfahrzeugscheinwerfer 14R, 14L des Kraftfahrzeugs 13 jeweils zumindest ein erfindungsgemäßes Kraftfahrzeuglichtmodul 2 umfassen. Figur 5 ist zu entnehmen, dass der Lichtleiter 1 des Kraftfahrzeuglichtmoduls 2 vorzugsweise passend an die Pfeilung des Kraftfahrzeugs 13 ausgebildet und angeordnet ist. Der Lichtleiter 1 ist derart geformt, dass sein Verlauf mit dem Verlauf der Abdeckscheibe des jeweiligen Kraftfahrzeugscheinwerfers 14R, 14L korrespondiert. Darüber hinaus zeigt die Figur 5 den großen Abstrahlwinkelbereich 68, in den das Kraftfahrzeuglichtmodul 2 Licht abstrahlen kann. Der Figur 5 ist zu entnehmen, dass das Kraftfahrzeuglichtmodul 2 Licht rückwärts hinsichtlich der Vorwärtsfahrtrichtung "-x" des Kraftfahrzeugs 13 abstrahlen kann.

Es ist ersichtlich, dass Abänderungen und/oder Hinzufügungen von Teilen an dem zuvor beschriebenen Lichtleiter erfolgen können, ohne dass vom Gebiet und Umfang der vorliegenden Erfindung abgewichen wird.

Ebenfalls ersichtlich ist, dass die Erfindung zwar in Bezug auf einige konkrete Beispiele beschrieben worden ist, ein Fachmann jedoch sicher in der Lage sein sollte, viele andere entsprechende Formen eines Lichtleiters zu erhalten, die die in den Ansprüchen dargelegten Eigenschaften aufweisen und damit alle in den dadurch festgelegten Schutzumfang fallen.

Die Bezugsziffern in den Ansprüchen dienen lediglich zum besseren Verständnis der vorliegenden Erfindungen und bedeuten auf keinen Fall eine Beschränkung der vorliegenden Erfindungen.

## Patentansprüche

1. Lichtleiter (1) für ein Kraftfahrzeuglichtmodul (2), welcher Lichtleiter (1)
- zumindest eine Stirnfläche (3) zum Einkoppeln von Licht eines Leuchtmittels (4),
- eine Grenzfläche (5), welche Grenzfläche (5) zumindest einen ersten Bereich (50) und einen zweiten Bereich (51) aufweist, wobei der erste Bereich (50) zum Totalreflektieren des in den Lichtleiter (1) eingekoppelten Lichts eingerichtet ist, und
- eine Mehrzahl als Erhebungen ausgebildeter Lichtauskoppelelemente (52) aufweist, welche Lichtauskoppelelemente (52) gegenüber dem zweiten Bereich (51) an der Grenzfläche (5) des Lichtleiters (1) angeordnet sind und dazu vorgesehen sind, sich in dem Lichtleiter (1) ausbreitendes Licht (6) derart umzulenken, dass es an dem zweiten Bereich (51) der Grenzfläche (5) aus dem Lichtleiter (1) auskoppelt,
**dadurch gekennzeichnet, dass**
die Lichtauskoppelelemente (52) als in einer Längsrichtung (7) des Lichtleiters (1) nacheinander angeordnete, sich wiederholende Lichtauskoppelelemente-Gruppen (520), (510), (530) ausgebildet sind, wobei jede Lichtauskoppelelemente-Gruppe (520), (510), (530) mehrere Lichtauskoppelelemente (521) bis (524), (531) bis (534), (541) bis (544) aufweist, wobei die Lichtauskoppelelemente (521) bis (524) dazu eingerichtet sind, das sich in dem Lichtleiter (1) ausbreitende Licht (6) derart umzulenken, dass es an dem zweiten Bereich (51) der Grenzfläche (5) aus dem Lichtleiter (1) in unterschiedliche, vorgegebene Auskopplungsrichtungen (60) bis (67) auskoppelt, wobei zumindest eine erste Auskopplungsrichtung (60) bezüglich der Längsrichtung (7) des Lichtleiters (1) rückwärts gerichtet ist und zumindest eine zweite Auskopplungsrichtung (61) bis (63), (65) bis (67) bezüglich der Längsrichtung (7) des Lichtleiters (1) vorwärts gerichtet ist.

2. Lichtleiter nach Anspruch 1, **dadurch gekennzeichnet, dass** zumindest zwei Lichtauskoppelelemente (521), (522) jeder Lichtauskoppelelemente-Gruppe (520) derart ausgebildet sind und/oder derart zusammenwirken, dass die zumindest zwei Lichtauskoppelelemente (521), (522) zumindest einen Teil des sich in dem Lichtleiter (1) ausbreitenden Lichtes (6) derart umlenken, dass der zumindest eine Teil des sich in dem Lichtleiter (1) ausbreitenden Lichtes (6) an dem zweiten Bereich (51) der Grenzfläche (5) aus dem Lichtleiter (1) zumindest teilweise in die erste Auskopplungsrichtung (60) auskoppelt, wobei die zumindest zwei Lichtauskoppelelemente (521), (522) jeder Lichtauskoppelelemente-Gruppe (520) vorzugsweise gleich groß aber größer als die restlichen Lichtauskoppelelemente (523), (524) dieser Lichtauskoppelelemente-Gruppe (520) sind.

3. Lichtleiter nach Anspruch 1 oder 2, **dadurch gekennzeichnet, dass** die Lichtauskoppelelemente (52) als sich quer zu der Längsrichtung (7) des Lichtleiters (1) erstreckende Erhebungen ausgebildet sind.

4. Lichtleiter nach Anspruch 3, **dadurch gekennzeichnet, dass** die sich quer zu der Längsrichtung (7) des Lichtleiters (1) erstreckenden Erhebungen als Mikrooptik-Prismen ausgebildet sind, wobei die Mikrooptik-Prismen vorzugsweise das gleiche Material wie der Lichtleiter (1) umfassen, insbesondere aus diesem Material bestehen.

5. Lichtleiter nach Anspruch 4, **dadurch gekennzeichnet, dass** die Mikrooptik-Prismen jeder Lichtauskoppelelemente-Gruppe (510), (520), (530) derart ausgebildet sind, dass ihre ersten Prismenwinkel (α₁₁ bis α₁₄), (α₂₁ bis α₂₄), (α₃₀) über einen vorgegebenen ersten Prismenwinkel-Bereich variieren.

6. Lichtleiter nach Anspruch 5, **dadurch gekennzeichnet, dass** die Mikrooptik-Prismen jeder Lichtauskoppelelemente-Gruppe (510), (520) derart angeordnet und/oder ausgebildet sind, dass der erste Prismenwinkel (α₁₁ bis α₁₄), (α₂₁ bis α₂₄) von einem ersten, der Stirnfläche (3) am nächsten liegenden, Mikrooptik-Prisma (511), (521) der Lichtauskoppelelemente-Gruppe zu einem letzten, der Stirnfläche (3) am weitesten liegenden, Mikrooptik-Prisma (514), (524) der Lichtauskoppelelemente-Gruppe (510), (520) kontinuierlich größer oder kontinuierlich kleiner wird.

7. Lichtleiter nach einem der Ansprüche 4 bis 6, **dadurch gekennzeichnet, dass** die Mikrooptik-Prismen in jeder Lichtauskoppelelemente-Gruppe (530) derart ausgebildet sind, dass ihre zweiten Prismenwinkel (β₃₁ bis β₃₄) über einen vorgegebenen zweiten Prismenwinkel-Bereich variieren.

8. Lichtleiter nach Anspruch 7, **dadurch gekennzeichnet, dass** die Mikrooptik-Prismen jeder Lichtauskoppelelemente-Gruppe (530) derart angeordnet und/oder ausgebildet sind, dass der zweite Prismenwinkel (β₃₁ bis β₃₄) von einem ersten, der Stirnfläche (3) am nächsten liegenden, Mikrooptik-Prisma (531) der Lichtauskoppelelemente-Gruppe (530) zu einem letzten, der Stirnfläche (3) am weitesten liegenden, Mikrooptik-Prisma (534) der Lichtauskoppelelemente-Gruppe (530) kontinuierlich größer oder kontinuierlich kleiner wird.

9. Lichtleiter nach einem der Ansprüche 1 bis 8, **dadurch gekennzeichnet, dass** alle Lichtauskoppelelemente-Gruppen zueinander geometrisch ähnlich ausgebildet sind.

10. Lichtleiter nach einem der Ansprüche 1 bis 9, **dadurch gekennzeichnet, dass** zumindest zwei der Lichtauskoppelelemente-Gruppen (510), (520), (530) unterschiedlich ausgebildet sind, wobei vorzugsweise jeder der zumindest zwei unterschiedlich ausgebildeten Lichtauskoppelelemente-Gruppen (510), (520), (530) dazu eingerichtet ist, das sich in dem Lichtleiter (1) ausbreitende Licht (6) derart umzulenken, dass es an dem zweiten Bereich (51) der Grenzfläche (5) aus dem Lichtleiter (1) in jeweils einen Auskopplungswinkel-Bereich (8) bis (10) auskoppelt..

11. Lichtleiter nach Anspruch 10, **dadurch gekennzeichnet, dass** sich unterschiedliche Auskopplungswinkel-Bereiche (8) bis (10) überschneiden und/oder überlappen.

12. Kraftfahrzeuglichtmodul (2) umfassend zumindest einen Lichtleiter (1) nach einem der Ansprüche 1 bis 11 und ein Leuchtmittel (4), welches derart ausgebildet ist und/oder in Bezug auf den Lichtleiter (1) derart angeordnet ist, dass das Leuchtmittel (4) in einem eingeschalteten Zustand Licht abstrahlt, welches Licht vollständig und vorzugsweise direkt in den Lichtleiter (1) einkoppelt.

13. Kraftfahrzeuglichtmodul nach Anspruch 12, **dadurch gekennzeichnet, dass** das Kraftfahrzeuglichtmodul (2) als eine Seitenmarkierungsleuchte ausgebildet ist.

14. Kraftfahrzeugscheinwerfer mit zumindest einem Kraftfahrzeuglichtmodul (2) nach Anspruch 12 oder 13.

15. Kraftfahrzeug mit zumindest einem Kraftfahrzeuglichtmodul (2) nach Anspruch 12 oder 13.
